# EUROPEAN PATENT SPECIFICATION

(11) **EP 2 209 841 B1**
(45) Date of publication and mention of the grant of the patent: **04.06.2014**
(21) Application number: 08850789.2
(22) Date of filing: 05.11.2008
(51) Int. Cl.: C08J 5/04, H01B 17/32, H01B 17/36, H01B 17/60, H01B 3/30, H01B 3/40, H01B 3/47, H01B 19/00

(54) **ELECTRICAL INSULATION SYSTEM**
ELEKTRISCHES ISOLIERUNGSSYSTEM
SYSTÈME D'ISOLATION ÉLECTRIQUE

(30) Priority: 13.11.2007 WO PCT/EP2007/062272
(43) Date of publication of application: 28.07.2010
(73) Proprietor: ABB Research Ltd., 8050 Zürich (CH)
(72) Inventor: SCHMIDT, Lars, CH-8048 Zürich (CH); PETTERSSON, Joakim, S-94162 Pitea (SE); JOHANSSON, Anders, S-94473 Pitea (SE); WIHLSSON, Lennart, S-94332 Öjebyn (SE); RITZER, Leopold, CH-5417 Untersiggenthal (CH)
(74) Representative: Zimmermann & Partner
(86) International application number: PCT/EP2008/064998
(87) International publication number: WO 2009/062873

(56) References cited:
- EP-A- 1 387 368
- WO-A-95/17755
- WO-A-2004/097858
- WO-A-2007/085414
- US-A1- 2004 039 127
- DATABASE WPI Week 200551 Thomson Scientific, London, GB; AN 2005-501008 XP002482145 -& JP 2005 179838 A (SHIN KOBE ELECTRIC MACHINERY) 7 July 2005 (2005-07-07)
- DATABASE WPI Week 200430 Thomson Scientific, London, GB; AN 2004-319863 XP002482146 -& JP 2004 002653 A (SHIN KOBE ELECTRIC MACHINERY) 8 January 2004 (2004-01-08)
- DATABASE WPI Week 200618 Thomson Scientific, London, GB; AN 2006-167621 XP002482147 -& JP 2006 037280 A (SHIN KOBE ELECTRIC MACHINERY) 9 February 2006 (2006-02-09)
- DATABASE WPI Week 200515 Thomson Scientific, London, GB; AN 2005-134785 XP002482148 -& JP 2005 015616 A (TOSHIBA CHEM CORP) 20 January 2005 (2005-01-20)
- DATABASE WPI Week 200504 Thomson Scientific, London, GB; AN 2005-034953 XP002482149 -& JP 2004 352845 A (TOSHIBA CHEM CORP) 16 December 2004 (2004-12-16)
- DATABASE WPI Week 200581 Thomson Scientific, London, GB; AN 2005-789579 XP002482143 -& JP 2005 306897 A (TOMOEGAWA SEISHISHO KK) 4 November 2005 (2005-11-04)
- DATABASE WPI Week 199837 Thomson Scientific, London, GB; AN 1998-434008 XP002482150 -& JP 10 182857 A (JAPAN VILENE CO LTD) 7 July 1998 (1998-07-07)
- DATABASE WPI Week 200614 Thomson Scientific, London, GB; AN 2006-128433 XP002482144 -& JP 2006 022433 A (TOMOEGAWA SEISHISHO KK) 26 January 2006 (2006-01-26)

## Description

The present invention refers to an electrical insulation system being a fiber-reinforced composite system which is suitable to be used in gas-insulated switchgear applications, preferably in gas-insulated metal enclosed switchgear applications, said electrical insulation system having improved mechanical properties and method of producing said electrical insulation system.

### State of the art

Cylindrical insulating parts in gas-insulated switchgears, such as chamber insulators and operating rods, are commonly made from fiber-reinforced materials. The material used is preferably a cured epoxy resin system reinforced with polyethylene terephthalate (PET) fibers or with aramide (Kevlar®, Twaron®) fibers or combinations thereof. These fibers have severe limitations. Polyethylene terephthalate fibers for example have comparatively weak mechanical properties. Aramide fibers have a low adhesion between fibers and the epoxy matrix as well as a high moisture uptake. Therefore, there is a need for an electrical insulation system with improved properties, especially for the use as electrical insulator to be used in gas-insulated electrical applications, for example in pressurized gas-insulated switchgear stations (GIS).

WO 95/17755 A relates to a process for producing an insulation system for electrically conductive components having an insulating material, which is protected against partial discharge. EP 1 387 368 A1 relates to the use of basalt and quartz fibers, and organic fibers such as liquid crystal polymers, aromatic polyamide and poly(p-phenylene-2,6-benzobisoxazole) fibers in an epoxide matrix or vinyl ester matrix.

It has now been found that a fiber-reinforced composite system as defined in claim 1 , yields an electrical insulation system with improved mechanical properties, which is especially useful as electrical insulator for the production of electrical gas-insulated switchgear applications, preferably gas-insulated metal enclosed electrical applications such as pressurized gas-insulated switchgear stations (GIS).

### Description of the invention

The present invention is defined in the claims. The present invention refers to an electrical gas-insulated switchgear application, preferably gas-insulated metal enclosed switchgear application, as defined in claim 1.

The present invention further refers to a method of producing said electrical gas-insulated switchgear application, preferably a gas-insulated metal enclosed electrical application, such as a pressurized gas-insulated switchgear station (GIS) as defined in claim 12. The present invention further refers to the use of said electrical insulation system in the production of said electrical gas-insulated switchgear applications, preferably gas-insulated metal enclosed electrical applications such as pressurized gas-insulated switchgear stations (GIS) or spacer insulators and related applications. The present invention further refers to said electrical gas-insulated switchgear applications, preferably gas-insulated metal enclosed electrical applications comprising an electrical insulation system according to the present invention.

Polyethylene naphthalate (PEN) is an ester of ethylene glycol with naphthalene dicarbonic acid and substantially contains the following chemical units:

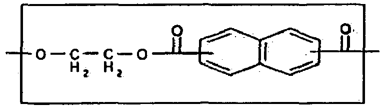

The copolyester of p-hydroxybenzoic acid and 6-hydroxy-2-naphthoic acid substantially contains the following chemical units:

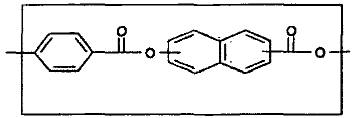

Said fibers to be used in the present invention have preferably a fiber diameter as used in roving cloths and fabrics made from said fibers. Generally the diameter is within the range of about 0.4-200 micron (µm), preferably within the range of about 1-100 micron and preferably within the range of about 5-50 micron. The diameter generally is not critical. It is within the knowledge of the expert in the art to optimize the diameter if required.

The reinforcing fiber may be present in form of chopped fibers having an average length preferably within the range of 0.5 mm to 15 mm, preferably within the range of 1.0 mm to 8 mm. The use according to the present invention, however, is that the fibers preferably are used in a non-chopped form, i.e. as a dry continuous non-woven filament, or as a fiber roving or as a woven fabric resp. cloth. The dry-body is preferably either produced by dry winding of a fiber roving or by dry winding of a fabric. Also one or more of such fiber rovings or cloths may be arranged within the hardened resin system in any required order, preferably by dry winding of the roving or cloth (e.g. around a mandrel), or in a parallel and/or rectangular order. The system may contain also a combination of chopped fibers and/or continuous fibers and/or one or more fiber rovings or cloths.

The reinforcing fiber selected from the fibers to be used according to the present invention and as specified herein above is present in an amount within the range of 20% to 70% by weight of the total weight of the fiber-reinforced composite system, preferably within the range of 30% to 60% by weight, and preferably within the range of 35% to 55% by weight of the total weight of the fiber-reinforced composite system.

The polymers as used in the present invention are selected from epoxy resin systems. The polymer preferably is a duro-plastic polymer selected from epoxy resin systems and most preferably is a cured epoxy resin system. As optional additives the fiber-reinforced composite system may further comprise components selected from filler materials, wetting/dispersing agents, plasticizers, antioxidants, light absorbers, silicones, and from further additives generally used in electrical applications. The total amount of reinforcing fiber, filler and the optional further additives may be up to 80% by weight and preferably up to 70% by weight of the total weight of the fiber-reinforced composite system.

The fiber-reinforced composite system of the present invention may optionally contain a mineral filler material of a micro size or nano size grain size distribution or a mixture of such filler materials. The mineral filler, however, has preferably an average grain size distribution within the range of 1 µm-500 µm, preferably within the range of 5 µm-100 µm. Preferably at least 70% of the particles, preferably at least 80% of the particles, and preferably at least 90% of the particles have a particle size within the range indicated.

The mineral filler is preferably selected from conventional filler materials as are generally used as fillers in electrical gas-insulated switchgear applications. Such filler materials e.g. are stable against degradation products of sulfur hexafluoride (SF₆) such as aluminum oxide and are known per se. Preferably the electrical isolation system according to the present invention does not contain a filler material.

Epoxy resin systems, polyesters, polyamides, polybutylene terephthalate, polyurethanes and polydicyclopentadiene have been described in the literature. When a special fiber reinforced composite system according to the present invention is made, said fiber component(s) together with the optional additives may be incorporated into the respective monomeric starting material of the polymer in an analogous manner as described in the literature generally for filler materials and other additives. Subsequently the starting material is hardened or cured. This is within the knowledge of the expert in the art.

When chopped reinforcing fibers as defined herein above are used, the reinforcing fiber material is incorporated into the monomeric starting materials of the respective polymer by known methods so as to be uniformly dispersed therein. The non-hardened composition thus obtained, i.e. the non-hardened epoxy resin composition, can for example be processed using conventional vacuum casting and/or automated pressure gelation (APG) manufacturing processes. The dispersion is formed into the desired shape using known methods, optionally with the help of a molding tool, and then hardened out or cured, optionally using post-curing.

In this sense the present invention also refers to a method of producing an electrical gas-insulated switchgear application, preferably a gas-insulated metal enclosed electrical application, characterized in that a chopped reinforcing fiber selected from polyethylene naphthalate (PEN) fibers, or from fibers being a copolyester of hydroxy-benzoic acid and hydroxy-naphthoic acid preferably a copolyester of p-hydroxybenzoic acid and 6-hydroxy-2-naphthoic acid, or from a mixture of these fibers, and optionally further additives as defined herein above, is incorporated into the monomeric starting material of the epoxy resin composition, so as to be uniformly dispersed therein, the dispersion is then formed into the desired shape, optionally with the help of a molding tool, and then hardened or cured and optionally post-cured.

The fiber-reinforced composite system according to the present invention, being suitable for the use as an electrical insulation system, preferably contains the reinforcing fiber in the form of a continuous non-woven filament, or as a fiber roving or as a woven fabric or as a non-crimp fabric. The dry-body is preferably either produced by dry winding of a fiber roving or by dry winding of a woven fabric or by dry winding of a non-crimp fabric. Also one or more of such fiber rovings or fabrics may be arranged within the hardened resin system in any required order, preferably by dry winding of the roving or fabric (e.g. around a mandrel), or in a parallel and/or rectangular order. The system may contain also a combination of chopped fibers and/or continuous fibers and/or one or more fiber rovings or fabrics.

The present invention refers therefore also to a process for producing an electrical gas-insulated switchgear application, preferably a gas-insulated metal enclosed electrical application, said process being characterized by the following steps: (i) providing a mold for the product comprising at least one dry layer of reinforcing material, said reinforcing material comprising a continuous non-woven filament and/or at least one fiber roving and/or at least one woven fabric and/or at least one non-crimp fabric within the mold as defined herein above; (ii) casting an unhardened monomeric epoxy resin mixture, into the mold so that the mold becomes filled and the at least one layer of reinforcing material becomes fully impregnated; (iii) hardening and/or curing the monomer composition within the mold at the appropriate temperature for a time long enough to get hardened resp. cured; and (iv) optionally post-curing the fiber-reinforced composite system obtained.

The above mentioned at least one dry layer of dry reinforcing material comprising a continuous non-woven filament and/or at least one fiber roving and/or at least one woven fabric and/or at least one non-crimp fabric is also named "drybody". To produce the drybody, the fibers, rovings or fabrics, as mentioned, are wound around a cylinder (the so called mandrel). Polyester fleece layers may be used to stabilize the drybody. Subsequently the mandrel is put into another cylinder (outer mould) and afterwards the fibers are impregnated.

Thermosetting resins used within the context of the present invention are epoxy resins made from aromatic and/or cycloaliphatic compounds. These compounds are known per se. Epoxy resins are reactive glycidyl compounds containing at least two 1,2-epoxy groups per molecule. Preferably a mixture of polyglycidyl compounds is used such as a mixture of diglycidyl- and triglycidyl compounds.

Epoxy compounds useful for the present invention comprise unsubstituted glycidyl groups and/or glycidyl groups substituted with methyl groups. These glycidyl compounds preferably have a molecular weight between 200 and 1200, especially between 200 und 1000 and may be solid or liquid. The epoxy value (equiv./100 g) is preferably at least three, preferably at least four and especially at about five, preferably about 4.9 to 5.1 or higher. Preferred are glycidyl compounds which have glycidyl ether- and/or glycidyl ester groups. Such a compound may also contain both kinds of glycidyl groups, e.g. 4-glycidyloxy-benzoic acid-glycidyl ester. Preferred are polyglycidyl esters with 1 to 4 glycidyl ester groups, especially diglycidyl ester and/or triglycidyl esters. Preferred glycidyl esters may be derived from aromatic, araliphatic, cycloaliphatic, heterocyclic, heterocyclic-aliphatic or heterocyclic-aromatic dicarbonic acids with 6 to 20, preferably 6 to 12 ring carbon atoms or from aliphatic dicarbonic acids with 2 to 10 carbon atoms. Preferred are for example optionally substituted epoxy resins of formula (IV): 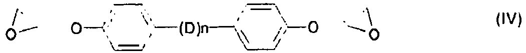
D = -O-, -SO2-, -CO-, -CH2-, -C(CH3)2-, -C(CF3)2-
n = zero or 1
or formula (V):

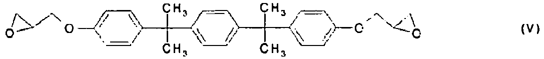

Examples are glycidyl ethers derived from Bisphenol A or Bisphenol F as well as glycidyl ethers derived from Phenol-Novolak-resins or cresol-Novolak-resins.

Cycloaliphatic epoxy resins are for example hexahydro-o-phthalic acid-bis-glycidyl ester, hexahydro-m-phthalic acid-bis-glycidyl ester or hexahydro-p-phthalic acid-bis-glycidyl ester. Also aliphatic epoxy resins, for example 1,4-butane-diol diglycidylether, may be used as a component for the composition of the present invention.

Preferred within the present invention are also aromatic and/or cycloaliphatic epoxy resins which contain at least one, preferably at least two, aminoglycidyl group in the molecule. Such epoxy resins are known and for example described in WO 99/67315. Pre-ferred compounds are those of formula (VI): 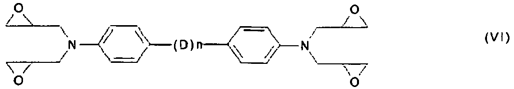
D = -O-. -SO2-, -CO-, -CH2-, -C(CH3)2-, -C(CF3)2-
n = Zero or 1

Especially suitable aminoglycidyl compounds are N,N-diglycidylaniline, N,N-diglycidyltoluidine, N,N,N',N'-tetraglycidyl-1,3-diaminobenzene, N,N,N',N'-tetraglycidyl-1,4-diaminobenzene, N,N,N',N'-tetraglycidylxylylendiamine, N,N,N',N'-tetraglycidyl-4,4'-diaminodiphenylmethane, N,N,N',N'-tetraglycidyl-3,3'-diethyl-4,4'-diaminodiphenylmethane, N,N,N',N'-tetraglycidyl-3,3'-diaminodiphenylsulfone, N,N'-Dimethyl-N,N'-diglycidyl-4,4'-diaminodiphenylmethane., N,N,N',N'-tetraglycidyl-alfa,alfa'-bis(4-aminophenyl)-p-diisopropylbenzene and N,N,N',N'-tetraglycidyl-alfa,alfa'-bis-(3,5-dimethyl-4-aminophenyl)-p-diisopropyl-benzene. Preferred aminoglycidyl compounds are also those of formula (VII): 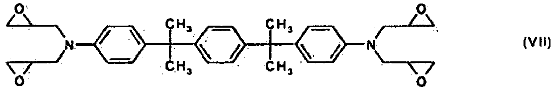 or of formula (VIII):

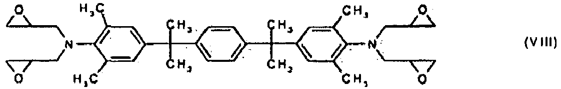

Further aminoglycidyl compounds which can be used according to the present invention are described in e.g. Houben-Weyl, Methoden der Organischen Chemie, Band E20, Makromolekulare Stoffe, Georg Thieme Verlag Stuttgart, 1987, pages 1926-1928.

Hardeners are also used in epoxy resins. Hardeners are carboxyl terminated polyester and/or carboxyl containing acrylate- and/or methacrylate polymers and/or carboxylic acid anhydrides.

The hardener can be used in concentrations within the range of 0.2 to 1.2, equivalents of hardening groups present, e.g. one anhydride group per 1 epoxide equivalent. However, often a concentration within the range of 0.2 to 0.4, equivalents of hardening groups is preferred.

As optional additives the composition may comprise further at least a curing agent (accelerant) for enhancing the polymerization of the epoxy resin with the hardener, at least one wetting/dispersing agent, plasticizers, antioxidants, light absorbers, as well as further additives used in electrical applications.

Curing agents for enhancing the polymerization of the epoxy resin with the hardener are for example tertiary amines, such as benzyldimethylamine or amine-complexes such as complexes of tertiary amines with boron trichloride or boron trifluoride; urea derivatives, such as N-4-chlorophenyl-N',N'-dimethylurea (Monuron); optionally substituted imidazoles such as imidazole or 2-phenyl-imidazole. Preferred are tertiary amines. Other curing catalyst such as transition metal complexes of cobalt (III), copper, manganese, (II), zinc in acetylacetonate may also be used, e.g. cobalt acetylacetonate(III). The amount of catalyst used is a concentration of about 50-1000 ppm by weight, calculated to the composition to be cured.

Wetting/dispersing agents are known per se for example in the form of surface activators; or reactive diluents, preferably epoxy-containing or hydroxyl-containing reactive diluents; thixotropic agents or resinous modifiers. Known reactive diluents for example are cresylglycidylether, diepoxyethyl-1,2-benzene, bisphenol A, bisphenol F and the diglycidylethers thereof, diepoxydes of glycols and of polyglycols, such as neopentylglycol-diglycidylether or trimethylolpropane-diglycidylether. Preferred commercially available wetting/dispersing agents are for example organic copolymers containing acidic groups, e.g. Byk® W-9010 having an acid value of 129 mg KOH/g). Such wetting/dispersing agents are preferably used in amounts of 0.5% to 1.0% based on the filler weight.

Plasticizers, antioxidants, light absorbers, as well as further additives used in electrical applications are known in the art and are not critical.

The insulating composition made from epoxy resin is made simply by mixing all components, optionally under vacuum, in any desired sequence and curing the mixture by heating. If a fiber-reinforced composite system comprising at least one layer of reinforcing fiber roving cloth is to be manufactured, the insulating composition made from epoxy resin is made simply by mixing all components, optionally under vacuum, in any desired sequence and then adding it to the at least one layer of reinforcing fiber roving cloth.

Preferably the hardener and the curing agent are separately added before curing. The curing temperature is preferably within the range of 50°C to 280°C, preferably within the range of 100°C to 200°C. Curing generally is possible also at lower temperatures, whereby at lower temperatures complete curing may last up to several days, depending also on catalyst present and its concentration.

The casting of the unhardened monomer composition into the mold so that the mold becomes filled and the at least one layer of reinforcing material in the mold becomes fully impregnated is preferably done by using vacuum techniques, preferably in combination with the application of pressure. Vibration methods may also be applied in order to improve impregnation and minimizing air bubbles. The non-hardened insulating resin composition specifically is preferably applied by using vacuum casting or automated pressure gelation (APG) manufacturing processes optionally under the application of vacuum or resin transfer molding or vacuum assisted resin transfer molding, also to remove all moisture and air bubbles from the insulating composition. The encapsulating composition may then be cured by any method known in the art by heating the composition to the desired curing temperature.

The electrical insulation system as described herein is useful for the production of electrical gas-insulated applications, especially electrical gas-insulated switchgear applications, preferably gas-insulated metal enclosed electrical applications such as pressurized gas-insulated switchgear stations (GIS), or life-tank breakers, dead-tank breaker and related applications.

The electrical insulation system as described herein may also be used for example in the production of transformers, high-voltage insulations for indoor and outdoor use, especially for outdoor insulators associated with high-voltage lines, as long-rod, composite and cap-type insulators.

The following examples illustrate the invention.

### Example 1

The epoxy resin compositions Formulation A and Formulation B are made from the components as given in Table 1. The compositions are prepared by thoroughly mixing the epoxy resin, the hardener and the accelerator at a temperature of 80°C. Then the mixture is outgassed under vacuum at 80°C. The mixture is then transferred into a mold using vacuum impregnation to produce insulating rods and operating rods by adding the uncured epoxy composition to the mould comprising a dry winding of a roving (each time made from PEN-fiber, or PET-fiber). The composition is then cured for ten hours at 140°C.

Definition of raw materials:
- CY 228: bisphenol A epoxy resin
- HY 918: modified carboxylic anhydride
- EPC 845: modified tertiary amine
- PEN-fiber: type T112-110 from Performance Fibers GmbH
- PET-fiber: type T711 from Performance Fibers GmbH

**Table 1:**

| | CY228 | HY918 | EPC 845 | Reinforcing fiber |
|---|---|---|---|---|
| Formulation A | 100 | 85 | 2 | PEN-fiber |
| Formulation B* | 100 | 85 | 2 | PET-fiber |

| | | | | |
|---|---|---|---|---|
| * Comparative | | | | |

### Comparison between PET and PEN reinforced rods

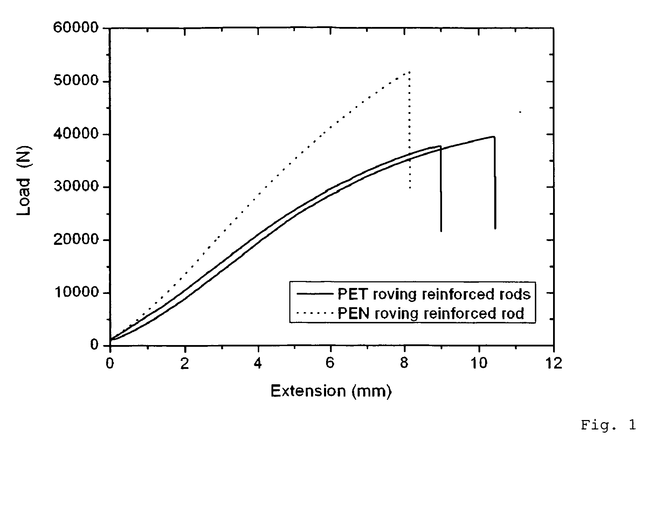

Test results show that the mechanical properties of PEN-fiber reinforced components made from Formulation A are superior compared to the mechanical properties of PET-fiber reinforced components made from Formulation B. Tensile tests carried out on PET and PEN reinforced epoxy rods show that there is a significant increase in stiffness and load to failure (Figure 1).

### Example 2

The epoxy resin compositions Formulation C and Formulation D are made from the components as given in Table 2. The compositions are prepared by thoroughly mixing the epoxy resin, the hardener and the accelerator at a temperature of 80°C. Then the mixture is outgassed under vacuum at 80°C. The mixture is then transferred into a mold using vacuum impregnation to produce insulating rods and operating rods by adding the uncured epoxy composition to the mould comprising a dry winding of a roving (each time made from Vectran®, or Kevlar fibres). The composition is then cured for ten hours at 140°C.

### Definition of raw materials:

| | |
|---|---|
| CY 228 | bisphenol A epoxy resin |
| HY 918 | modified carboxylic anhydride |
| EPC 845 | modified tertiary amine |
| Vectran® | a copolyester from p-hydroxybenzoic acid and 6-hydroxy-2-naphthoic acid in the form of a fiber roving from Kuraray America, Inc. |
| Kevlar | Aramid fiber roving from DuPont |

**Table 2:**

| | CY228 | HY918 | EPC 845 | Reinforcing fiber |
|---|---|---|---|---|
| Formulation C | 100 | 85 | 2 | Vectran® |
| Formulation D* | 100 | 85 | 2 | Kevlar |

| | | | | |
|---|---|---|---|---|
| *Comparative | | | | |

### Comparison between Vectran® and Kevlar reinforced rods

The moisture uptake of Vectran is significantly lower compared to Kevlar. A drying step prior to impregnation of the reinforcing fibres is only required in the case of Kevlar. The substitution of Kevlar with Vectran® makes the production of insulators more efficient and the product more suited for electrical insulation application, due to a lower moisture content.

## Claims

1. Electrical gas-insulated switchgear application, comprising an electrical insulation system being a fiber-reinforced composite, said electrical insulation system comprising a solidified polymer composition and a reinforcing fiber and optionally further additives, **characterized in that**
(i) said solidified polymer composition is an epoxy resin system;
(ii) said reinforcing fiber is selected from polyethylene naphthalate (PEN) fibers or from fibers being a copolyester of hydroxy-benzoic acid and hydroxy-naphthoic acid, or from a mixture of these fibers;
(iii) said reinforcing fiber is present in an amount within the range of 20% to 70% by weight of the total weight of the fiber-reinforced composite system;
(iv) said epoxy resin system comprises at least an aromatic and/or cycloaliphatic compound and is a reactive glycidyl compound containing at least two 1,2-epoxy groups per molecule, a hardener, and optionally a curing agent; and
(v) said hardener of said epoxy resin system is a carboxyl-terminated polyester and/or a carboxyl containing acrylate-polymer and/or a methacrylate polymer and/or a carboxylic acid anhydride.

2. Electrical gas-insulated switchgear application according to claim 1, **characterized in that** said reinforcing fiber is present in form of chopped fibers.

3. Electrical gas-insulated switchgear application according to claim 1 or 2, **characterized in that** the reinforcing fiber is present as a dry continuous non-woven filament, or as a fiber roving or as a woven fabric, or as a non-crimp fabric.

4. Electrical gas-insulated switchgear application according to any one of the claims 1-3, **characterized in that** said system contains a combination of chopped fibers and/or continuous fibers and/or fiber rovings or cloths.

5. Electrical gas-insulated switchgear application according to any one of the claims 1-4, **characterized in that** the reinforcing fiber is present in an amount within the range of 30% to 60% by weight of the total weight of the fiber-reinforced composite system.

6. Electrical gas-insulated switchgear application according to claim 1, **characterized in that** the epoxy resin system is made from aromatic and/or cycloaliphatic compounds with an epoxy value within the range of 4.9-5.1 equiv./100 g or higher.

7. Electrical gas-insulated switchgear application according to claim 1, **characterized in that** the polymer is an epoxy resin system, wherein the hardener is a cyclic anhydride of an aromatic, aliphatic, cycloaliphatic or heterocyclic polycarbonic acid.

8. Electrical gas-insulated switchgear application according to any one of the claims 1-7, **characterized in that** the fiber-reinforced composite system further comprises components selected from filler materials, wetting/dispersing agents, plasticizers, antioxidants, light absorbers, silicones, and from further additives generally used in electrical applications.

9. Electrical gas-insulated switchgear application according to any one of the claims 1-8, **characterized in that** the total amount of reinforcing fiber, filler and the optional further additives present is up to 80% by weight of the total weight of the fiber-reinforced composite system.

10. Electrical gas-insulated switchgear application according to any one of the claims 1-9, **characterized in that** said composite system contains a mineral filler material of a micro size or nano size grain size distribution or a mixture of such filler materials.

11. Electrical gas-insulated switchgear application according to claim 10, **characterized in that** said mineral filler is selected from filler materials which are stable against degradation products of sulfur hexafluoride.

12. Method of producing an electrical gas-insulated switchgear application according to any one of the claims 1-11, **characterized in that**
(i) a chopped reinforcing fiber selected from polyethylene naphthalate (PEN) fibers or from fibers being a copolyester of hydroxy-benzoic acid and hydroxy-naphthoic acid, or from a mixture of these fibers, , and optionally further additives, is incorporated into the monomeric starting material of the epoxy resin composition, so as to be uniformly dispersed therein, (ii) the dispersion being then formed into the desired shape, optionally with the help of a molding tool, and hardened or cured and optionally post-cured.

13. Method of producing an electrical gas-insulated switchgear application according to any one of the claims 1-11, comprising the following steps: (i) providing a mold for the product comprising at least one dry layer of reinforcing material, said reinforcing material comprising a continuous non-woven filament and/or at least one fiber roving and/or at least one woven fabric within the mold; (ii) casting an unhardened monomeric epoxy resin mixture, into the mold so that the mold becomes filled and the at least one layer of reinforcing material becomes fully impregnated; (iii) hardening and/or curing the monomer composition within the mold at the appropriate temperature for a time long enough to get hardened resp. cured; and (iv) optionally post-curing the fiber-reinforced composite system obtained.

14. Method of producing an electrical gas-insulated switchgear application according to claim 13, **characterized in that** the casting an unhardened monomer composition into the mold is done by using vacuum techniques and/or pressure under optional application of vibration methods.

15. Method of producing an electrical gas-insulated switchgear application according to claim 14, **characterized in that** the non-hardened insulating resin composition is applied by using vacuum casting; or automated pressure gelation (APG) manufacturing processes optionally under the application of vacuum; or resin transfer molding; or vacuum assisted resin transfer molding.

16. The use of the electrical insulation system according to any one of the claims 1-11 in the production of electrical gas-insulated switchgear applications.

17. Electrical gas-insulated switchgear application according to claim 1, **characterized in that** said electrical gas-insulated switchgear application is a gas-insulated metal enclosed electrical application.

## Patentansprüche

1. Elektrische gas-isolierte Schaltanwendung, umfassend ein elektrisches Isolationssystem, das ein faserverstärkter Verbund ist, wobei das elektrische Isolationssystem eine verfestigte Polymerzusammensetzung und eine Verstärkungsfaser und optional weitere Zusätze umfasst, **dadurch gekennzeichnet, dass**
(i) die verfestigte Polymerzusammensetzung ein Epoxidharzsystem ist;
(ii) die Verstärkungsfaser ausgewählt ist, aus Polyethylennaphthalat (PEN)-Fasern oder aus Fasern, die ein Copolyester von Hydroxybenzoesäure und Hydroxynaphthoesäure sind, oder aus einer Mischung dieser Fasern;
(iii) die Verstärkungsfaser mit einem Anteil im Bereich von 20 bis 70 Gewichtsprozent des Gesamtgewichts des faserverstärkten Verbundsystems vorhanden ist;
(iv) das Epoxidharzsystem wenigstens eine aromatische und/oder cycloaliphatische Verbindung umfasst und eine reaktive Glycidyl-Verbindung ist, die wenigstens zwei 1,2-Epoxidgruppen pro Molekül, ein Härtemittel und optional ein Aushärtungsmittel enthält; und
(v) das Härtemittel des Epoxidharzsystems ein carboxylterminierter Polyester und/oder ein carboxylhaltiges Acrylatpolymer und/oder ein Methacrylatpolymer und/oder ein Carbonsäureanhydrid ist.

2. Elektrische gas-isolierte Schaltanwendung nach Anspruch 1, **dadurch gekennzeichnet, dass** die Verstärkungsfaser in Form von zerkleinerten Fasern vorhanden ist.

3. Elektrische gas-isolierte Schaltanwendung nach Anspruch 1 oder 2, **dadurch gekennzeichnet, dass** die Verstärkungsfaser als trockenes, kontinuierliches Vliesfilament, oder als Faserroving oder als Fasergewebe oder als nicht-gekrümmtes Gewebe vorhanden ist.

4. Elektrische gas-isolierte Schaltanwendung nach einem der Ansprüche 1 bis 3, **dadurch gekennzeichnet, dass** das System eine Kombination von zerkleinerten Fasern und/oder kontinuierlichen Fasern und/oder Faserrovings oder gewebte Tücher enthält.

5. Elektrische gas-isolierte Schaltanwendung nach einem der Ansprüche 1 bis 4, **dadurch gekennzeichnet, dass** die Verstärkungsfaser mit einem Anteil im Bereich von 30 bis 60 Gewichtsprozent des Gesamtgewichts des faserverstärkten Verbundsystems vorhanden ist.

6. Elektrische gas-isolierte Schaltanwendung nach Anspruch 1, **dadurch gekennzeichnet, dass** das Epoxidharzsystem aus aromatischen und/oder cycloaliphatischen Verbindungen mit einem Epoxidwert im Bereich von 4.9-5.1 äquiv. /100g oder höher gemacht ist.

7. Elektrische gas-isolierte Schaltanwendung nach Anspruch 1, **dadurch gekennzeichnet, dass** das Polymer ein Epoxidharzsystem ist, wobei das Härtemittel ein zyklisches Anhydrid einer aromatischen, aliphatischen, cycloaliphatischen oder heterocyclischen Polycarbonsäure ist.

8. Elektrische gas-isolierte Schaltanwendung nach einem der Ansprüche 1 bis 7, **dadurch gekennzeichnet, dass** das faserverstärkte Verbundsystem des Weiteren Komponenten umfasst, die ausgewählt sind aus: Füllmaterialien, Benetzungs-/Dispergiermittel, Weichmacher, Antioxidationsmittel, Lichtabsorber, Silikonen, und aus weiteren Zusätzen, die im Allgemeinen in elektrischen Anwendungen verwendet werden.

9. Elektrische gas-isolierte Schaltanwendung nach einem der Ansprüche 1 bis 8, **dadurch gekennzeichnet, dass** der Gesamtanteil der vorhandenen Verstärkungsfaser, des Füllmaterials und der optionalen weiteren Zusätze bis zu 80 Gewichtsprozent des Gesamtgewichts des faserverstärkten Verbundsystems ist.

10. Elektrische gas-isolierte Schaltanwendung nach einem der Ansprüche 1 bis 9, **dadurch gekennzeichnet, dass** das Verbundsystem ein mineralisches Füllmaterial mit einer Mikrogrößen- oder Nanogrößen-Korngrößenverteilung oder eine Mischung solcher Füllmaterialien enthält.

11. Elektrische gas-isolierte Schaltanwendung nach Anspruch 10, **dadurch gekennzeichnet, dass** das mineralische Füllmaterial aus Füllmaterialien ausgewählt ist, die stabil gegen Abbauprodukte von Schwefelhexafluorid sind.

12. Verfahren zum Herstellen einer elektrischen gas-isolierten Schaltanwendung nach einem der Ansprüche 1 bis 11, **dadurch gekennzeichnet, dass**
(i) eine zerkleinerte Verstärkungsfaser, die ausgewählt ist aus Polyethylennaphthalat (PEN)-Fasern oder aus Fasern, die ein Copolyester von Hydroxybenzoesäure und Hydroxynaphthoesäure sind, oder aus einer Mischung dieser Fasern, und optional weitere Zusätze in das monomere Ausgangsmaterial der Epoxidharzzusammensetzung eingearbeitet werden, so dass sie darin gleichmäßig dispergiert sind,
(ii) die Dispersion dann in die gewünschte Gestalt geformt wird, optional mit der Hilfe eines Gusswerkzeugs, und gehärtet oder ausgehärtet und optional nach-ausgehärtet wird.

13. Verfahren zum Herstellen einer elektrischen gas-isolierten Schaltanwendung nach einem der Ansprüche 1 bis 11, umfassend die folgenden Schritte:
(i) Bereitstellen einer Form für das Produkt, umfassend wenigstens eine Trockenschicht eines Verstärkungsmaterials, wobei das Verstärkungsmaterial ein kontinuierliches Vliesfilament und/oder wenigstens ein Faserroving und/oder wenigstens ein Fasergewebe in der Form umfasst;
(ii) Gießen einer ungehärteten monomeren Epoxidharzmischung in die Form, so dass die Form gefüllt wird und die wenigstens eine Schicht des Verstärkungsmaterials vollständig imprägniert wird;
(iii) Härten und/oder Aushärten der Monomerzusammensetzung in der Form bei der geeigneten Temperatur für eine ausreichend lange Zeit, um gehärtet bzw. ausgehärtet zu werden; und
(iv) optionales Nach-Aushärten des erhaltenen faserverstärkten Verbundsystems.

14. Verfahren zum Herstellen einer elektrischen gas-isolierten Schaltanwendung nach Anspruch 13, **dadurch gekennzeichnet, dass** das Gießen einer ungehärteten Monomerzusammensetzung in die Form unter Verwendung von Vakuumtechniken und/oder Druck bei optionaler Anwendung von Vibrationsverfahren durchgeführt wird.

15. Verfahren zum Herstellen einer elektrischen gas-isolierten Schaltanwendung nach Anspruch 14, **dadurch gekennzeichnet, dass** die nicht-gehärtete isolierende Harzzusammensetzung unter Verwendung von Vakuumgießen angewendet wird; oder von automatischen Druckgelier- (automated pressure gelation, APG) Herstellungsprozessen optional unter Anwendung eines Vakuums; oder von Harztransfergießen; oder von vakuumunterstütztem Harztransfergießen.

16. Verwendung des elektrischen Isolationssystems nach einem der Ansprüche 1 bis 11 in der Herstellung von elektrischen gas-isolierten Schaltanwendungen.

17. Elektrische gas-isolierte Schaltanwendung nach Anspruch 1, **dadurch gekennzeichnet, dass** die elektrische gas-isolierte Schaltanwendung eine gas-isolierte metallumschlossene elektrische Anwendung ist.

## Revendications

1. Application d'appareil de commutation à isolation gazeuse électrique, comprenant un système d'isolation électrique qui est un composite renforcé de fibres, ledit système d'isolation électrique comprenant une composition polymère solidifiée et une fibre de renforcement et, optionnellement, d'autres additifs, **caractérisée par le fait que**
(i) ladite composition polymère solidifiée est un système de résine époxyde ;
(ii) ladite fibre de renforcement est choisie parmi les fibres de naphtalate de polyéthylène (PEN) ou parmi les fibres qui sont un copolyester de l'acide hydroxy-benzoïque et de l'acide hydroxy-naphtoïque, ou parmi un mélange de ces fibres ;
(iii) ladite fibre de renforcement est présente en une quantité de l'ordre de 20% à 70% en poids du poids total du système composite renforcé de fibres ;
(iv) ledit système de résine époxyde comprend au moins un composé aromatique et/ou cycloaliphatique et est un composé de glycidyle réactif contenant au moins deux groupes de 1,2-époxy par molécule, un durcisseur, et, optionnellement, un agent de durcissement ; et
(v) ledit durcisseur dudit système de résine époxy est un polyester à terminaison carboxyle et/ou un polymère à base d'acrylate contenant du carboxyle et/ou un polymère à base de méthacrylate et/ou un anhydride d'acide carboxylique.

2. Application d'appareil de commutation à isolation gazeuse électrique selon la revendication 1, **caractérisée par le fait que** ladite fibre de renforcement est présente sous forme de fibres coupées.

3. Application d'appareil de commutation à isolation gazeuse électrique selon la revendication 1 ou 2, **caractérisée par le fait que** la fibre de renforcement est présente sous forme d'un filament non-tissé continu sec, ou sous forme de voile de fibres ou sous forme de tissu tissé, ou sous forme d'un tissu non plissé.

4. Application d'appareil de commutation à isolation gazeuse électrique selon l'une quelconque des revendications 1 à 3, **caractérisée par le fait que** ledit système contient une combinaison de fibres coupées et/ou de fibres continues et/ou de voile de fibres ou de tissus.

5. Application d'appareil de commutation électrique à isolation gazeuse selon l'une quelconque des revendications 1 à 4, **caractérisée par le fait que** la fibre de renforcement est présente en une quantité de l'ordre de 30 % à 60% en poids du poids total du système de composite renforcé par des fibres.

6. Application d'appareil de commutation à isolation gazeuse électrique selon la revendication 1, **caractérisée par le fait que** le système de résine époxyde est réalisé à partir de composés aromatiques et/ou cycloaliphatiques, avec une valeur époxy de l'ordre de 4,9 à 5,1 equiv./100 g ou supérieure.

7. Application d'appareil de commutation à isolation gazeuse électrique selon la revendication 1, **caractérisée par le fait que** le polymère est un système de résine époxyde, dans lequel le durcisseur est un anhydride cyclique d'un acide aromatique, aliphatique, cycloaliphatique ou polycarbonique hétérocyclique.

8. Application d'appareil de commutation à isolation gazeuse électrique selon l'une quelconque des revendications 1 à 7, **caractérisée par le fait que** le système de composite renforcé de fibres comprend par ailleurs des composants choisis parmi les matériaux de charge, les agents d'humidification/dispersion, les plastifiants, les antioxydants, les absorbeurs de lumière, les silicones, et parmi d'autres additifs généralement utilisés dans les applications électriques.

9. Application d'appareil de commutation à isolation gazeuse électrique selon l'une quelconque des revendications 1 à 8, **caractérisée par le fait que** la quantité totale de fibres de renforcement, de charge et, optionnellement, d'autres additifs présents est de jusqu'à 80% en poids du poids total du système de composite renforcé de fibres.

10. Application d'appareil de commutation à isolation gazeuse électrique selon l'une quelconque des revendications 1 à 9, **caractérisée par le fait que** ledit système de composite contient un matériau de charge minéral d'une répartition de grosseur de grain micrométrique ou nanométrique ou un mélange de tels matériaux de charge.

11. Application d'appareil de commutation à isolation gazeuse électrique selon la revendication 10, **caractérisée par le fait que** ladite charge minérale est choisie parmi les matériaux de charge qui sont stables aux produits de dégradation de l'hexafluorure de soufre.

12. Procédé de production d'une application d'appareil de commutation à isolation gazeuse électrique selon l'une quelconque des revendications 1 à 11,
**caractérisé par le fait que**
(i) une fibre de renforcement coupée choisie parmi les fibres de naphtalate de polyéthylène (PEN) ou les fibres qui sont un copolyester de l'acide hydroxy-benzoïque et l'acide hydroxy-naphtoïque, ou un mélange de ces fibres, et, optionnellement, d'autres additifs, est incorporée dans le matériau monomère de départ de la composition de résine époxyde, de manière à y être dispersée uniformément, (ii) la dispersion étant ensuite formée selon la forme désirée, optionnellement à l'aide d'un moule, et durcie ou séchée, et optionnellement post-durcie.

13. Procédé de production d'une application d'appareil de commutation à isolation gazeuse électrique selon l'une quelconque des revendications 1 à 11, comprenant les étapes suivantes consistant à : (i) prévoir un moule pour le produit comprenant au moins une couche sèche de matériau de renforcement, ledit matériau de renforcement comprenant un filament non-tissé continu et/ou au moins un voile de fibres et/ou au moins un tissu tissé dans le moule, (ii) couler un mélange de résine époxyde monomère non durci dans le moule, de sorte que le moule se remplisse et que l'au moins une couche de matériau de renforcement devienne entièrement imprégnée ; (iii) faire durcir et/ou faire sécher la composition monomère dans le moule à une température appropriée pendant un temps suffisamment long pour durcir ou sécher ; et (iv) optionnellement post-durcir le système de composite renforcé par fibres obtenu.

14. Procédé de production d'une application d'appareil de commutation à isolation gazeuse électrique selon la revendication 13, **caractérisé par le fait que** la coulée d'une composition monomère non durcie dans le moule est effectuée à l'aide de techniques sous vide et/ou sous pression avec application optionnelle de méthodes de vibration.

15. Procédé de production d'une application d'appareil de commutation à isolation gazeuse électrique selon la revendication 14, **caractérisé par le fait que** la composition de résine isolante non durcie est appliquée à l'aide de coulée sous vide ; ou de processus de fabrication par gélification sous pression automatisée (APG), optionnellement avec application de vide ; ou moulage par transfert de résine ; ou moulage par transfert de résine assisté par vide.

16. Utilisation du système d'isolation électrique selon l'une quelconque des revendications 1 à 11 dans la production d'applications d'appareil de commutation à isolation gazeuse électrique.

17. Application d'appareil de commutation à isolation gazeuse électrique selon la revendication 1, **caractérisée par le fait que** ladite application d'appareil de commutation à isolation gazeuse électrique est une application électrique renfermée dans du métal à isolation gazeuse.
